# EUROPEAN PATENT SPECIFICATION

(11) **EP 4 550 619 B1**
(45) Date of publication and mention of the grant of the patent: **30.09.2026**
(21) Application number: 24832169.7
(22) Date of filing: 02.02.2024
(51) Int. Cl.: H02J 7/50, H02J 7/60, H02J 7/80, H02J 7/92, H01M 10/42

(54) **BATTERY SYSTEM MANAGEMENT DEVICE AND METHOD, FOR DETERMINING OPTIMAL NUMBER OF BATTERIES**
BATTERIESYSTEMVERWALTUNGSVORRICHTUNG UND -VERFAHREN ZUR BESTIMMUNG DER OPTIMALEN ANZAHL VON BATTERIEN
DISPOSITIF ET PROCÉDÉ DE GESTION DE SYSTÈME DE BATTERIE, POUR DÉTERMINER UN NOMBRE OPTIMAL DE BATTERIES

(30) Priority: 30.06.2023 KR 20230084787; 29.08.2023 KR 20230113262; 01.02.2024 KR 20240015561
(43) Date of publication of application: 07.05.2025
(73) Proprietor: LG Energy Solution, Ltd., Seoul 07335 (KR)
(72) Inventor: MUN, Byeongho, Daejeon 34122 (KR); JEONG, Suyeup, Daejeon 34122 (KR); CHOI, Jinyoung, Daejeon 34122 (KR)
(74) Representative: Plasseraud IP
(86) International application number: PCT/KR2024/001586
(87) International publication number: WO 2025/005381

(56) References cited:
- EP-A1- 4 300 110
- FR-A1- 3 112 861
- KR-A- 20220 083 927
- KR-A- 20220 083 927
- KR-A- 20220 112 127
- KR-A- 20220 112 127
- KR-A- 20230 041 663
- KR-A- 20230 047 709
- KR-A- 20230 047 709
- US-A1- 2023 133 663
- US-A1- 2023 133 663

## Description

The present disclosure relates to a battery system management device.

### [Background Art]

A secondary battery is a battery that can be reused by charging even after discharge, and can be used as an energy source for small devices such as portable phones, tablet PCs, and vacuum cleaners, and is also used as an energy source for medium-to-large sized devices such as automobiles and an energy storage systems (ESSs) for smart grids.

The secondary battery is applied to a system in the form of an assembly such as a battery module in which a plurality of battery cells are connected in series and/or parallel, or a battery pack in which battery modules are connected in series and/or parallel, according to the requirements of the system. In the case of medium-to-large sized devices such as ESSs for smart grids, a high-capacity battery system in which a plurality of battery racks are connected in parallel may be applied to satisfy the required capacity for a corresponding device.

Meanwhile, the number of batteries included in such a battery system is adjustable according to, for example, the magnitude of a short-circuit current in the batteries. In this regard, appropriate battery system management technology is needed according to a situation (see, e.g., Korean Patent Laid-open Publication No. 10-2010-0050514). Example of background art, taken as closest prior art, can be found in document KR 20230047709.

### [Detailed Description of the Invention]

### [Technical Problem]

The present disclosure provides a battery system management device that determines the optimal number of batteries provided in a battery system.

In addition, the present disclosure provides a battery system management method using such a battery system management device.

### [Technical Solution]

A battery system management device according to an embodiment of the present disclosure is defined in the appended claims.

A method of managing a battery system by a battery system management device is also provided.

### [Advantageous Effects]

According to the embodiments of the present disclosure as described above, by determining the optimal number of batteries included in the battery system using an equivalent model for the battery system, it is possible to minimize the design cost of the battery system and maximize the energy density of the battery system, whereby product competitiveness can be strengthened.

### [Brief Description of the Drawings]

FIG. 1 is a block diagram of a general battery system.
(A) and (B) of FIG.2 are graphs for explaining short-circuit currents generated in the battery system 10 of FIG. 1.
FIG. 3 is a block diagram of a battery system to which the present disclosure is applicable.
FIG. 4 is an operation flowchart of a battery system management method according to an embodiment of the present disclosure.
FIG. 5 is a block diagram for explaining an equivalent model of a battery system according to an embodiment of the present disclosure.
FIG. 6 is an operation flowchart of a battery system management method according to another embodiment of the present disclosure.
FIG. 7 is a circuit diagram for explaining an equivalent model of a battery according to an embodiment of the disclosure.
FIGS. 8 and 9 are views exemplifying battery systems to which the present disclosure is applicable.
FIG. 10 is an operation flowchart of a battery system management method according to another embodiment of the present disclosure.
FIG. 11 is a block diagram for explaining simulation results for a first case.
FIG. 12 is a block diagram for explaining simulation results for a second case.
FIG. 13 is a block diagram for explaining simulation results for a third case.
FIG. 14 is a block diagram for explaining simulation results for a fourth case.
FIG. 15 is a block diagram for explaining simulation results for a fifth case.
(A) and (B) of FIG.16 are block diagrams for explaining structures of battery systems derived according to the present disclosure.
FIG. 17 is a block diagram of a battery system management device according to an embodiment of the present disclosure.

In the accompanying drawings, corresponding components are given the same reference numerals. A person ordinary skilled in the art will appreciate that the drawings illustrate elements simply and clearly and have not necessarily been drawn to scale. For example, in order to aid understanding of various embodiments, the dimensions of elements illustrated in the drawings may be exaggerated compared to other elements..
100: battery rack
200: BCP
300: PCS
400: battery system management device

### [Best Mode]

The present disclosure may be variously modified and may have various embodiments. Thus, embodiments will be exemplified in the drawings and described in detail in the detailed description. However, it is to be understood that this is not intended to limit the disclosure to embodiments, and all the modifications, equivalents, and substitutions fall within the scope of the disclosure. Like reference numerals are used for like elements in illustrating each drawing.

Terms such as "first," "second," "A," and "B," may be used to describe various components, but the components should not be limited by the terms. These terms are used only for the purpose of distinguishing one component from another. For example, without departing from the scope of the disclosure, a first component may be referred to as a second component, and similarly, a second component may also be referred to as a first component. The term "and/or" includes a combination of a plurality of related listed items or any of a plurality of related listed items.

When a component is referred to as being "connected" or "coupled" to another component, it is to be understood that the component may be directly connected or coupled to the other element, but another component may be present therebetween. In contrast, when a component is referred to as being "directly connected" or "directly coupled" to another component, it is to be understood that no other components are not present therebetween.

The terms used herein are only used to describe specific embodiments and are not intended to limit the present disclosure. Singular expressions include plural expressions unless the context clearly dictates otherwise. Herein, it is to be understood that the terms such as "include" and "have" are intended to indicate the presence of features, numbers, steps, operations, components, parts described in the description, or combinations thereof, but are not intended to preclude the possibility of presence or addition of one or more other features, numbers, steps, operations, components, parts, or combinations thereof.

Unless defined otherwise, all terms used herein, including technical or scientific terms, have the same meaning as commonly understood by a person ordinarily skilled in the art to which the present disclosure belongs. Terms, such as those defined in a commonly used dictionary, are to be interpreted as having a meaning consistent with the meaning in the context of the related art, and not to be interpreted in an ideal or excessively formal meaning unless explicitly defined herein.

Some terms used herein are defined as follows.

A battery cell is the smallest unit that stores power, and a battery module refers to an assembly in which a plurality of battery cells are electrically connected.

A battery rack refers to a system with a minimal single structure that electrically connects module units set by a battery manufacturer and can be monitored and controlled through a battery management system (BMS), and may include a plurality of battery modules (or battery racks) and at least one battery protection unit (BPU) or protection device.

A battery bank may refer to a group of large-scale battery rack systems in each of which a plurality of battery racks are connected in parallel. Monitoring and control of the rack BMSs (RBMSs) in battery bank units may be performed through the BMSs in battery bank units.

A battery assembly refers to an assembly that includes a plurality of electrically connected battery cells and is applied to a specific system or device to function as a power source. Here, the battery assembly may refer to, for example, a battery module, a battery pack, a battery rack, or a battery bank, but the scope of the present disclosure is not limited to these entities.

The number of batteries included in a battery system is determined based on the magnitude of a short-circuit current in the batteries and the short-circuit capacity of a protection element included in the battery system. For example, when the short-circuit current capacity of the protection element is 100 kA and the short-circuit current of a unit battery is 10 kA, the maximum number of batteries connected in parallel is determined to be 10.

However, according to the method of determining the number of batteries, there is a problem in that the total number of batteries provided in the battery system is unnecessarily limited. For example, the total short-circuit current of a battery system is affected by various factors such as the connection structure between batteries and the type and length of cables connecting individual components. However, when the number of batteries is simply determined based on the magnitude of the short-circuit current in the batteries and the short-circuit capacity of the protection element included in the battery system, the total short-circuit current of the battery system is calculated assuming that the short-circuit current of each battery is the same. Accordingly, the total short-circuit current is estimated to be higher than actual value. Accordingly, the maximum number of batteries included in the battery system is unnecessarily limited, which will unnecessarily increase the design cost of the battery system and lower energy density. Thus, there is a risk that product competitiveness will weaken.

The present disclosure provides a battery management system capable of optimize battery connection by predicting short-circuit currents of a battery and a battery system.

Hereinafter, the present disclosure and various embodiments of the present disclosure will be described in detail with reference to the drawings.

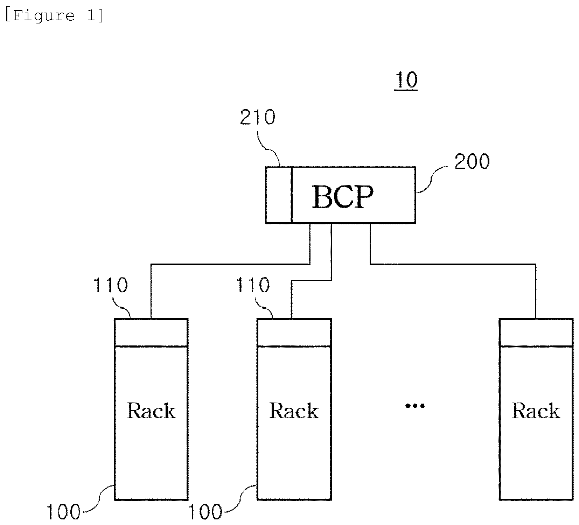

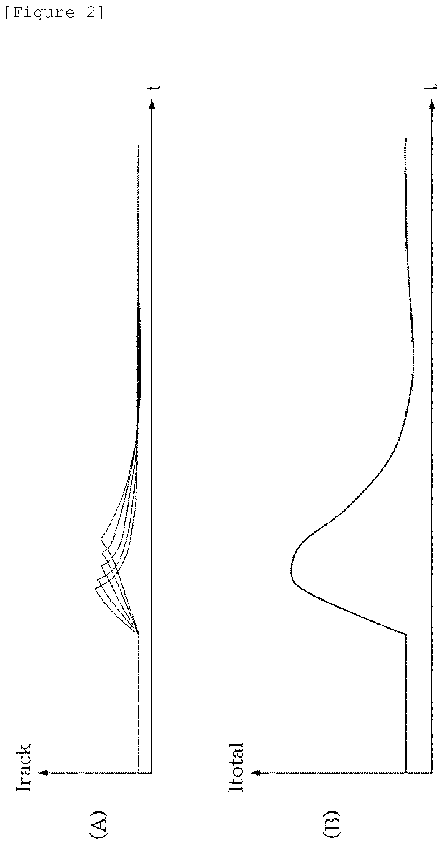

FIG. 1 is a block diagram of a battery system 10 of according to an embodiment of the present disclosure, and (A) and (B) of FIG.2 are graphs for explaining short-circuit currents generated in the battery system 10 of FIG. 1.

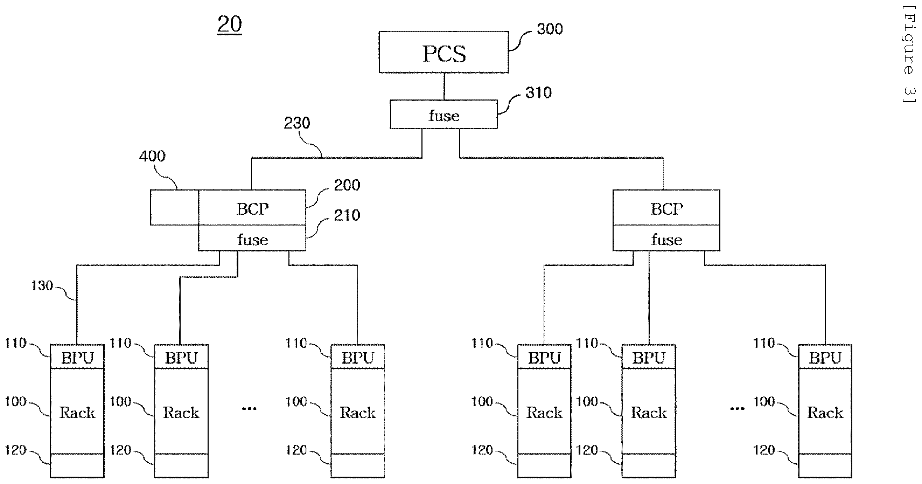

Referring to FIG. 1, the battery system 10 may include a plurality of battery racks 100. Here, the plurality of battery racks 100 are connected in parallel to a battery control panel (BCP) 200, and the BCP 200 may be electrically connected to, for example, a power conversion system (PCS) 300 to be described later with reference to FIG. 3.

Inside each of the battery racks 100, a battery protection unit (BPU) 110 is provided, and the BPU 110 may include at least one protection element 110 (e.g., a fuse and/or a switching device). In addition, at least one protection element 210 (e.g., a fuse and/or a switching device) may be included in the BCP 200.

For example, the number of battery racks 100 connected in parallel in a unit battery system 10 is determined based on the short-circuit capacity of the protection element and the magnitude of the short-circuit current. For example, when the short-circuit current capacity of the protection element 210 disposed inside the BCP 200 is 100 kA and the short-circuit current applied to each of the batter racks 100 is 10 kA, the maximum number of battery racks 100 that can be included in the battery system may be decided to be 10.

However, according to the method, there is a problem in that the total number of battery racks 100 provided in the battery system 10 is unnecessarily limited.

(A) of FIG. 2 illustrates a short-circuit current applied to each of a plurality of battery racks 100 (in this embodiment, five battery racks connected in parallel) when a short circuit occurs in the battery system, and (B) of FIG. 2 illustrates the total short-circuit current, which is the sum of the short-currents of the plurality of battery racks 100.

As illustrated in the structure of FIG. 1 as well, according to the connection structure of the battery system 10, the installation locations of respective battery racks 100 within the battery system 10 differ from each other, and the lengths of cables for respective battery racks 100 for connection to the BCP may differ from each other. Accordingly, as illustrated in (A) of FIG. 2, the short-circuit currents applied to the respective battery racks 100 reach the maximum current values at different time points due to differences in time constants. Due to these differences in time constants of respective battery racks 100, the maximum value of the total short-circuit current becomes smaller than the sum of the maximum short-circuit current values of respective battery racks 100, as illustrated in (B) of FIG. **2****.**

However, in the above-described method of calculating the number of batteries, since the total short-circuit current of the battery system 10 is calculated assuming that the short-circuit currents of respective battery racks 100 are the same, the total short-circuit current is evaluated to be higher than it actually is. Accordingly, the number of battery racks 100 included in the battery system 10 is unnecessarily limited, which will unnecessarily increase the design cost of the battery system 10 and lowers the energy density, whereby product competitiveness will weaken.

FIG. 3 is a block diagram of a battery system 20 to which an embodiment of the present disclosure is applicable.

The battery system 20 according to an embodiment may include a plurality of battery racks 100, at least one BCP 200, and a power conversion system 300 (PCS). The battery racks 100 may be connected in parallel to each of a plurality of BCPs 200, and the BCPs 200 may be connected in parallel to the power conversion system 300. Inside each of the battery racks 100, a BPU 110 and a battery management system (BMS) 120 may be provided. Here, for example, the BPU 110 may include at least one protection element **(e.g.,** a fuse and/or a switching device). The BMS 120 may be a rack battery management system (RBMS).

At least one protection element 210 **(e.g.,** a fuse and/or a switching device) may be included within the BCP 200. In addition, at least one protection element 310 **(e.g.,** a fuse and/or a switching device) may be disposed on a connection path between the PCS 300 and the BCP 200. In addition, the battery racks 100, the BCPs 200, and the PCS 300 may be electrically connected to each other via connection elements 130,230. Here, the connection elements 130,230 may be made of a conductive metal and include, for example, at least one of a cable and a busbar.

Meanwhile, according to an embodiment, a battery system management device 400 may be connected to at least one of the BCPs 200. The battery system management device 400 may be installed inside each BCP 200 or may be connected via a wired connection or a wireless connection to each BCP 200 from the outside of the BCP 200 to manage the battery system.

Each of the protection elements 110, 210, 310 included in the battery system 20 may have a predetermined limiting current value. Here, the limiting current value may be defined as a value obtained by multiplying the short-circuit capacity of a protection element by a predefined adjustment constant **K.** For example, the adjustment constant K may be defined as a predetermined value of about 0.8 or more and about 1 or less. For example, when the short-circuit capacity of a specific protection element is 100 kA and the adjustment constant K is 0.95, the limiting current of the protection element may be defined as 95 kA (100 kA * 0.95).

The structure of the battery system 20 illustrated in FIG. 3 is an example for the present disclosure, and the scope of the present disclosure is not limited to this structure. For example, individual DC/DC convertors, rather than the BPUs 110, may be applied to certain or all of battery racks 100 may be equipped with an individual DC/DC converter rather than the BPU 110, and batteries in module or pack units, rather than in battery rack units, may be applied to the battery system 20.

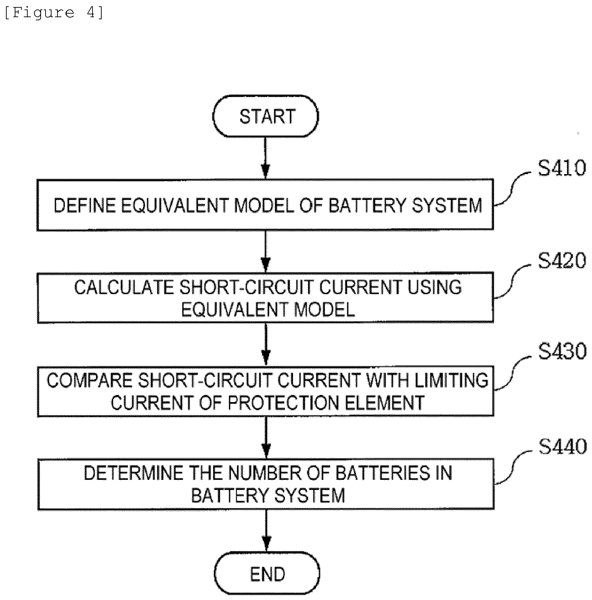

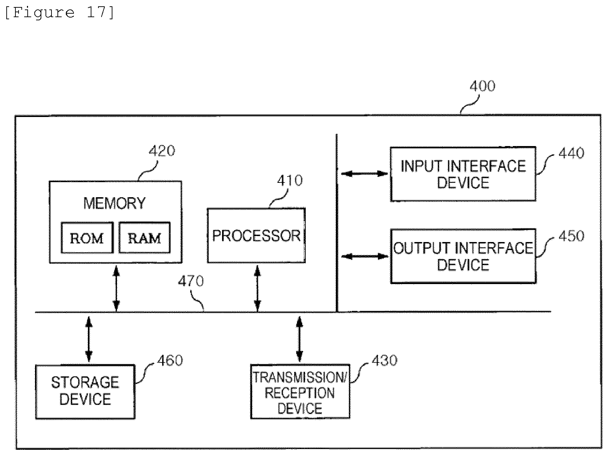

FIG. 4 is an operation flowchart of a battery system management method according to an embodiment of the present disclosure. The battery system management method according to the present disclosure may be performed, for example, by the battery system management device 400. The battery system management device 400 is illustrated in FIG. 17.

The battery system management device 400 may define an equivalent model for the battery system 20 (S410).

According to an embodiment, a battery system may have a predefined connection structure including a plurality of batteries and at least one protection element. Here, the protection element may be placed at, for example, one or more locations among an input/output terminal of a battery, a connection point of batteries, and a connection point of battery groups. Meanwhile, a battery may mean a battery cell or a battery assembly.

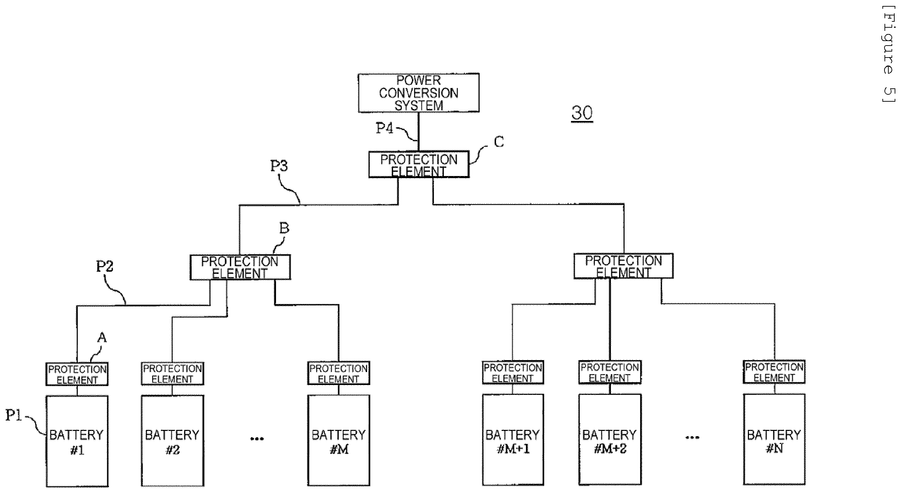

FIG. 5 is a block diagram for explaining an equivalent model for a battery system 30 according to an embodiment of the present disclosure.

The battery system management device 400 may define an equivalent model for a battery system 30 that corresponds to the structure of the actual battery system 20.

For example, the battery system management device 400 may define an equivalent model for a battery system 30 including a total of N batteries and a power conversion system, as illustrated in FIG. **5****.** Here, M batteries connected in parallel may be defined as a first group, and the remaining batteries connected in parallel may be defined as a second group.

The locations of the protection elements may be defined to correspond to locations on the actual battery system. For example, the location of the protection element 210 may be defined as an input/output terminal A of each of the batteries, a parallel connection point B of the batteries, and a parallel connection point C of the battery groups.

For each of the protection elements included in the equivalent model, a limiting current may be defined. Here, the limiting current may be defined as a value obtained by multiplying the short-circuit capacity of an actual protection element by a predefined adjustment constant **K.**

The battery system management device 400 may define an equivalent model for the entire battery system based on a first equivalent model for a battery, a second equivalent model for a protection element, and a third equivalent model for connection elements 130, 230 that electrically connect the battery to an external device. Here, the first equivalent model may be defined as an equivalent circuit including an internal resistance Ric and an internal inductance Lic according to the characteristics of the battery, the second equivalent model may be defined as an equivalent circuit including a resistance Rarc and a capacitance Carc according to the characteristics of the protection element and a switch, and the third equivalent model may be defined as an equivalent circuit including a resistance Rec and an inductance Lec according to the lengths and characteristics of the connection elements 130, 230.

Referring back to FIG. 4, the battery system management device 400 may calculate a short-circuit current generated in the battery system when a short circuit is generated at a certain location in the battery system using the equivalent model defined in S410 (S420). For example, the battery system management device 400 may calculate a short-circuit current generated at a certain location of the battery system when a short circuit is generated inside a battery.

When the battery system includes a plurality of protection elements, the battery system management device 400 may calculate a short-circuit current applied to each of the protection elements. For example, the battery system management device 400 may calculate the short-circuit current applied to each of the protection elements included in the battery system when a short circuit occurs inside the battery.

The location where a short circuit is generated within the battery system may be predefined. Here, the short-circuit occurrence location may include at least one of a first location defined as a location inside a battery, a second location defined as a location between the battery and the connection points of batteries, a third location defined as a location between the connection point of the batteries and a connection points of battery groups, and a fourth location defined as a location between the connection point of the battery groups and a power conversion system. For example, in FIG. 5, the short circuit occurrence location may be defined as at least one of a location inside a battery (P1), a location between the battery and a parallel connection point of batteries (P2), a location between the parallel connection point of the batteries and the parallel connection point of battery groups (P3), and a location between the parallel connection points of the battery groups and a power conversion system (P4).

The battery system management device 400 may calculate the short-circuit current generated in the battery system when a short circuit is generated at each of a plurality of locations in the battery system. For example, when a short circuit is generated at P1, the battery system management device 400 may calculate the short-circuit current applied to each of the protection elements, and when a short circuit is generated at P2, the battery system management device 400 may calculate the short-circuit current applied to each of the protection elements when a short circuit is generated at P2. As another example, when short circuits occur simultaneously at P1 and P2, the battery system management device 400 may calculate the short-circuit current applied to each of the protection elements.

The battery system management device 400 may compare the short-circuit current calculated in S420 with the limiting current of the protection elements included in the battery system (S430).

In an embodiment, the battery system management device 400 may identify whether the short-circuit current exceeds the limiting current for each of the protection elements included in the battery system. For example, for all of the protection elements, the battery system management device 400 may compare the short-circuit current applied to each protection element with the limiting current of each protection element, and may determine whether there is a protection element having a short-circuit current exceeding the limiting current.

The battery system management device 400 may determine the number of batteries provided in the battery system based on the comparison result in S430 (S440). Here, the battery system management device 400 may determine the number of batteries such that a short-circuit current applied to each of the protection elements does not exceed the limiting current of each of the protection elements. For example, when a short-circuit current applied to a specific protection element exceeds the limiting current of each of the protection elements, the battery system management device 400 may determine that the corresponding protection element is not able to withstand the short-circuit current and attempt to sequentially reduce the number of batteries. In contrast, when the short-circuit current applied to the protection element is lower than the limiting current value of each of the protection elements, the battery system management device 400 may determine that the corresponding protection element is able to withstand the short-circuit current and may attempt to maintain the present state or to sequentially increase the number of batteries.

In an embodiment, the battery system management device 400 may determine the maximum number of batteries that allow all of the protection elements of the battery system to withstand a short circuit current.

For example, the battery system management device 400 may conduct a simulation (S410 to S430) to calculate the short-circuit current for a battery system including N batteries. When all of the protection elements are identified to be able to withstand the short-circuit current (the short-circuit current is equal to lower than the limiting current), the battery system management device 400 may conduct a simulation (S410 to S430) for a battery system including N + 1 batteries. Here, when at least one protection element is identified not to be able to withstand the short-circuit current (the short-circuit current exceeds the limiting current), the battery system management device 400 may determine the maximum number of batteries in the battery system to be **N.**

In an embodiment, the battery system management device 400 may calculate the short-circuit current applied to each of the protection elements for each of the cases where a short circuit is generated at a plurality of locations, and for all of the cases, the battery system management device 400 may determine the maximum number of batteries allowing all of the protection elements 210 withstand the short-circuit current.

For example, the battery system management device 400 may conduct a simulation (S410 to S430) for the cases where a short circuit is generated at each of P1 to P4 in the battery system including N batteries. For all of the cases, when all of the protection elements are identified to be able to withstand the short-circuit current (the short-circuit current is lower than or equal to the limiting current), the battery system management device 400 may conduct a simulation (S410 to S430) for four cases targeting the battery system including N+1 batteries. Here, when at least one protection element is identified not to be able to withstand the short-circuit current (the short-circuit current exceeds the limiting current), the battery system management device 400 may determine the maximum number of batteries in the battery system to be **N.**

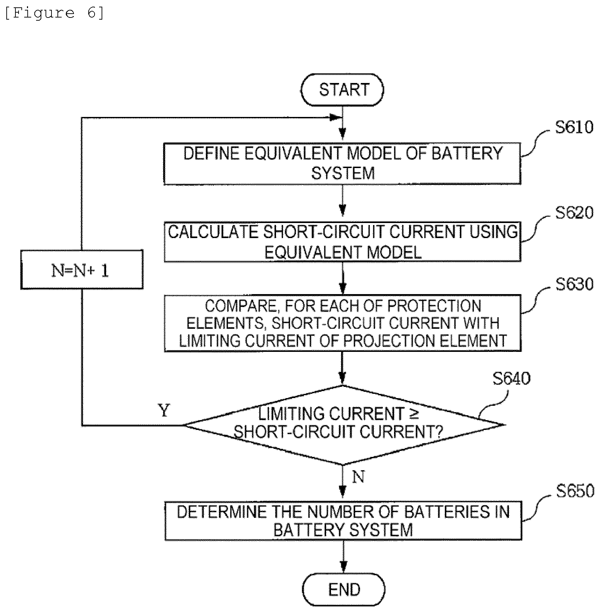

FIG. 6 is an operation flowchart of a battery system management method according to another embodiment of the present disclosure.

The battery system management device 400 may define an equivalent model for a battery system 30 including N batteries (S610).

Thereafter, when a short circuit is generated at a location in the battery system, the battery system management device 400 may calculate the short-circuit current applied to the protection element using the equivalent model defined in S610 (S620).

Here, for each case where a short circuit is generated at one or more locations, the battery system management device 400 may calculate the short-circuit current applied to each of the protection elements. For example, for each of the cases where a short circuit occurs at P1 to P4, the battery system management device 400 may calculate the short-circuit current applied to each of the protection elements.

The battery system management device 400 may compare the short-circuit current calculated in S620 with the limiting currents of the protection elements (S630). Here, the battery system management device 400 may compare the short-circuit currents and limiting currents of the protection elements for all of the cases.

For all of the cases, when the short-circuit currents of all of the protection elements are identified to be equal to or lower than the limiting current (Y in S640), the battery system management device 400 may redefine an equivalent model by changing the number of batteries included in the battery system to N + 1 (S610), and may calculate the short-circuit currents using the redefined equivalent model (S620).

Here, when at least one protection element having a short-circuit current exceeding the limiting current is detected (N in S640), the battery system management device 400 may determine the maximum number of batteries in the battery system to be N (S650).

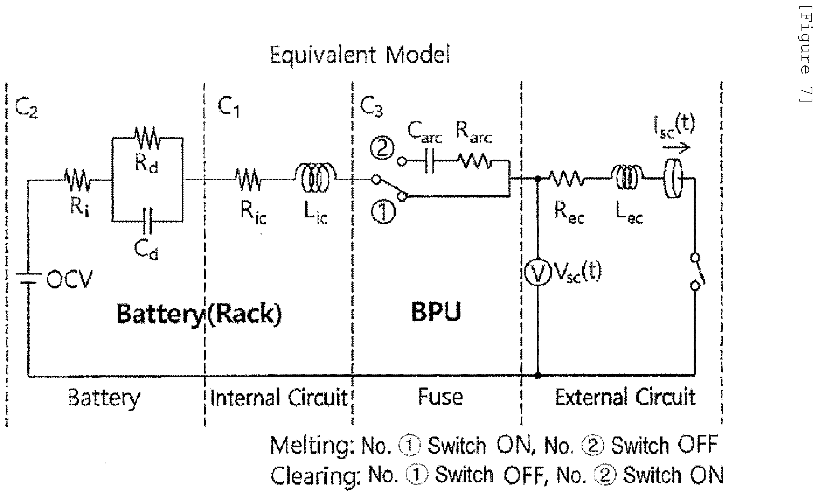

FIG. 7 is a circuit diagram for explaining an equivalent model of a battery according to an embodiment of the disclosure.

The battery system management device 400 may define an equivalent model for the entire battery system based on a first equivalent model for a battery, a second equivalent model for a protection element, and a third equivalent model for a connection element 130, 230 that electrically connects the battery to an external device. Here, the battery system management device 400 may calculate a short-circuit current value using the equivalent model.

The first equivalent model for the battery may be defined as an equivalent circuit that reflects the characteristics of the battery.

For example, the first equivalent model may include an equivalent circuit of the battery and an equivalent circuit inside the battery. Here, the equivalent circuit of the battery may be defined as a circuit in which an open circuit voltage OCV, a first resistor Ri, and a second resistor Rd and a capacitor Cd, which are connected in parallel, are connected in series. In addition, the equivalent circuit inside the battery may be defined as an RL series circuit which effectively represents the characteristics of a short circuit in a DC circuit, and may be defined as a circuit in which an internal resistor Ric and an internal inductor Lic are connected in series.

The second equivalent model for the protection element may be defined as a circuit including a resistor Rarc, a capacitor Carc, and a switch.

Meanwhile, in the battery system, the characteristics of voltage and current may change based on the occurrence of a short circuit. Accordingly, a protection element (e.g., a fuse) may change from a first state (melting) to a second state (clearing) with reference to the occurrence of a short circuit.

Here, the first state may be a state in which a conductor begins to melt due to the heat generated inside the fuse before an arc occurs, and the second state may be a state in which a conductor melts and a current flows into the air and an arc occurs.

In order to implement the fusing characteristic of the protection element, the second equivalent model according to an embodiment of the present disclosure may be implemented as a circuit including a resistor Rarc, a capacitor Carc, and a switch, as illustrated in FIG. 7.

The third equivalent model for the connection element 130, 230 may be defined as an RL circuit in which a resistor Rec and an inductor Lec are connected in series. Here, the resistor Rec and the inductor Lec may be defined by resistance values and an inductance according to the lengths and characteristics of the connection element 130, 230 (e.g., a cable or a busbar).

As the equivalent model according to an embodiment of the present disclosure is defined by reflecting the characteristics of the connection elements 130, 230 according to the connection structure of the battery system, the battery system management device 400 may calculate a short-circuit current by reflecting the differences in time constants of respective connection elements 130, 230, which makes it possible to calculate the optimal number of batteries that can be applied to the battery system more accurately.

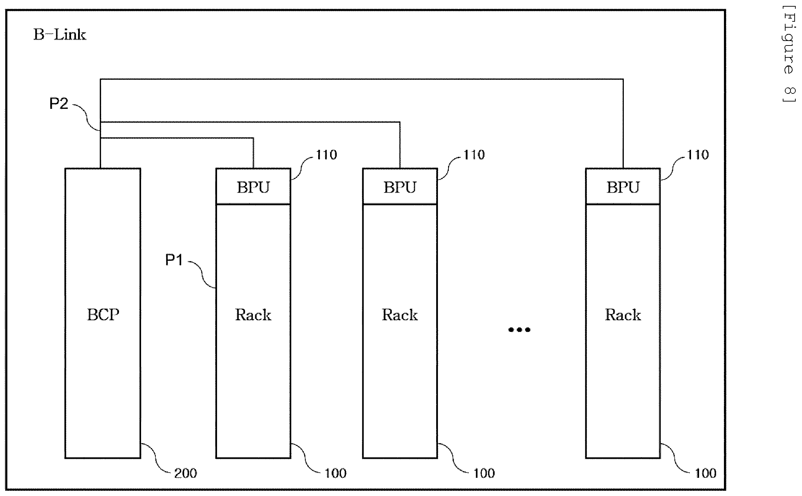

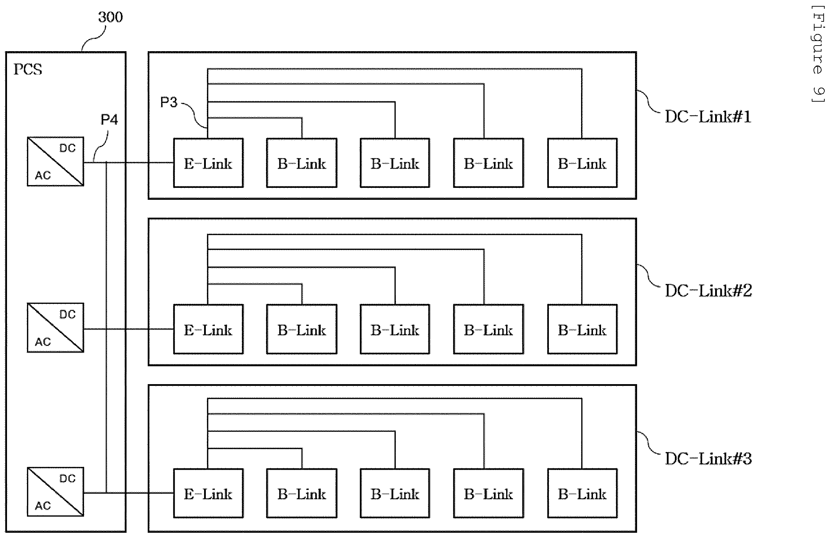

FIGS. 8 and 9 are examples of battery systems to which the present disclosure is applicable. The battery system illustrated in FIG. 8 may include a plurality of battery racks 100 as a B-link, and the battery system illustrated in FIG. 9 may include a PCS 300 including a plurality of AC/DC inverters, and a plurality of DC-links.

In FIG. 9, each of the AC/DC inverters may be electrically connected to a DC-link. Here, each DC-link may include an E-link and a plurality of B-Links. The-link may include therein at least one protection element (e.g., a fuse or a switching device). The B-Links may be connected in parallel to the E-link. Here, each B-link may include a plurality of battery racks 100 connected in parallel.

In FIG. 8, the B-link may include a BCP 200 and a plurality of battery racks 100. Here, the battery racks 100 may be connected in parallel to the BCP 200, and the BCP 200 may be electrically connected to an E-Link. Each of the battery racks 100 may include therein a BPU.

The BCP 200 and BPU 110 may include therein at least one protection element (e.g., a fuse and/or a switching device).

The battery system management device 400 may define an equivalent model for the battery system illustrated in FIGS. 8 and 9, and may determine the maximum number of battery racks 100 that can be included in the battery system using the defined equivalent model.

Here, the battery system management device 400 may calculate the short-circuit current applied to each of the protection elements for each of the cases where a short circuit is generated at a plurality of locations by reflecting a time constant characteristic of a connection element 130, 230 according to a predetermined connection structure, and for all of the cases, the battery system management device 400 may determine the maximum number of batteries capable of withstanding the short-circuit current.

In the battery system illustrated in FIGS. 8 and 9, as in the case of FIG. 5, a short-circuit current may be generated at one or more of a location inside a battery rack (P1), a location between the battery rack 100 and a BCP 200 (P2), a location between the BCP and an E-Link (P3), and a location between the E-Link and a PCS 300 (P4).

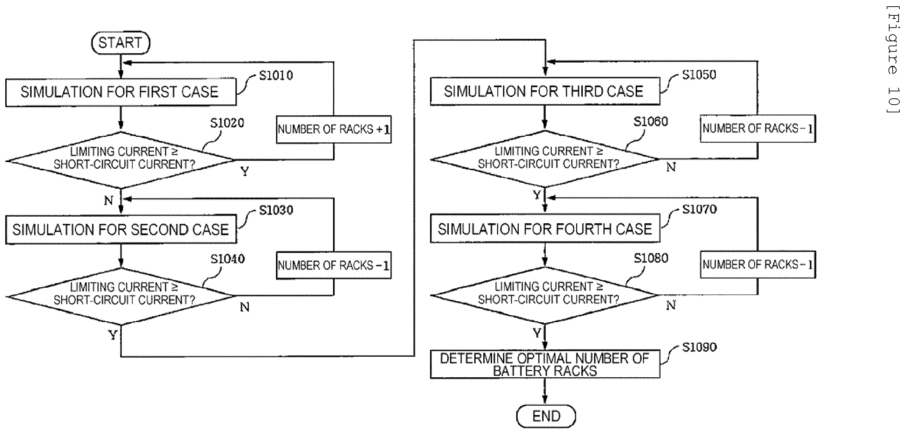

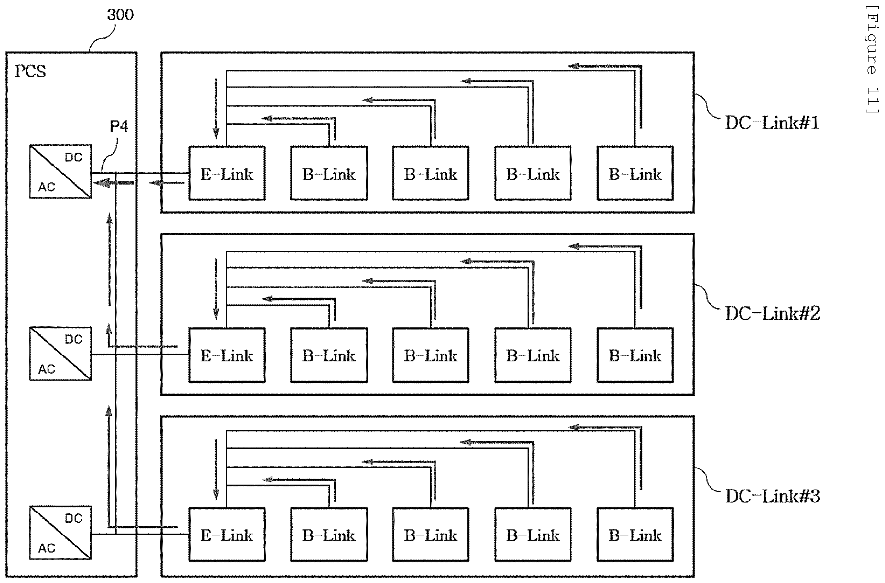

FIG. 10 is an operation flowchart of a battery system management method according to another embodiment of the present disclosure. In addition, FIGS. 11 to 15 are block diagrams for explaining simulation results for first to fifth cases. Hereinbelow, with reference to FIGS. 10 to 15, a method of determining the optimal number of batteries for the battery system illustrated in FIGS. 8 and 9 will be described.

Referring to FIG. 10, a battery system management device 400 may sequentially conduct a simulation to calculate a short-circuit current for each of the cases in which a short circuit is generated at a plurality of locations, may sequentially identify the simulation results, and may determine the maximum number of batteries to be included in the battery system. For example, the battery system management device 400 may sequentially conduct the simulations from the highest location to the lowest location in the structure of the battery system. For example, a simulation for calculating a short-circuit current may proceed in the order of P4, P3, P2, and P1.

Referring to FIG. 10, the battery system management device 400 may conduct a simulation to calculate a short-circuit current for a case in which a short-circuit is generated at P4 (a first case) using an equivalent model of a battery system including N batteries (S1010)

According to an embodiment, when a short circuit is generated at P4, the highest location in the structure of the battery system, as illustrated in FIG. 11, a high short circuit current applied from DC-Links #1 to #3 flows to an AC/DC converter connected to DC-Link #1. At this time, it is necessary for each of the protection elements included in the battery be able to withstand the generated short-circuit current. For example, as illustrated in FIG. 5, it is necessary for each of the protection elements located at A, B, and C to be able to withstand the high short-circuit current applied from DC-Links #1 to #3 at respective locations.

The battery system management device 400 may compare the short-circuit current for each protection element calculated as a result of the simulation with the limiting current of each protection element.

As a result of the comparison, when the short-circuit currents of all of the protection elements are identified to be equal to or lower than the limiting current (Y in S1020), the battery system management device 400 may change the number of battery racks 100 included in the battery system (e.g., increasing the number by 1) to redefine an equivalent model, and may conduct a simulation using the redefined equivalent model. For example, in this case, the battery system management device 400 may determine that all of the protection elements are able to withstand a short-circuit current increased by a short circuit at each location and may increase the number of battery racks 100 to redefine an equivalent model, and may conduct a simulation.

When at least one protection element having a short-circuit current exceeding the limiting current is detected (N in S1020), the battery system management device 400 may determine the maximum number of battery racks 100 applicable to the battery system to be N.

Next, the battery system management device 400 may conduct a simulation of the next step to calculate a short-circuit current for the case where a short-circuit occurs in P3 (a second case) (S1030).

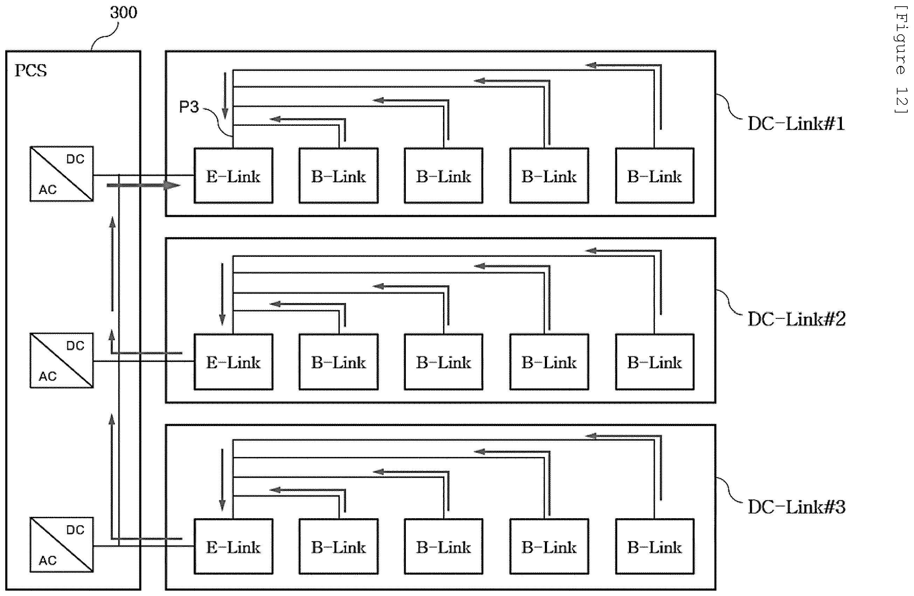

When a short circuit is generated at P3, as illustrated in FIG. 12, the high short-circuit current applied from DC-Links #2 and #3 and the B-Links of DC-Link #1 flows toward the E-Link of DC-Link#1. At this time, it is necessary for each of the protection elements included in the battery to be able to withstand the generated short-circuit current.

The battery system management device 400 may compare the short-circuit current for each protection element calculated as a result of the simulation with the limiting current of each protection element.

When at least one protection element having a short-circuit current exceeding the limiting current is detected (N in S1040), the battery system management device 400 may determine that at least one protection element is not able to withstand the generated short-circuit current, may change the number of battery racks 100 included in the battery system (e.g., decreasing the number by 1) to redefine an equivalent model, and may perform a simulation using the redefined equivalent model.

Meanwhile, when the short-circuit currents of all of the protection elements are identified to be equal to or lower than the limiting current (Y in S1040), the battery system management device 400 may conduct a simulation to calculate the short-circuit current for the case where a short circuit is generated at P2 (a third case) (S1050).

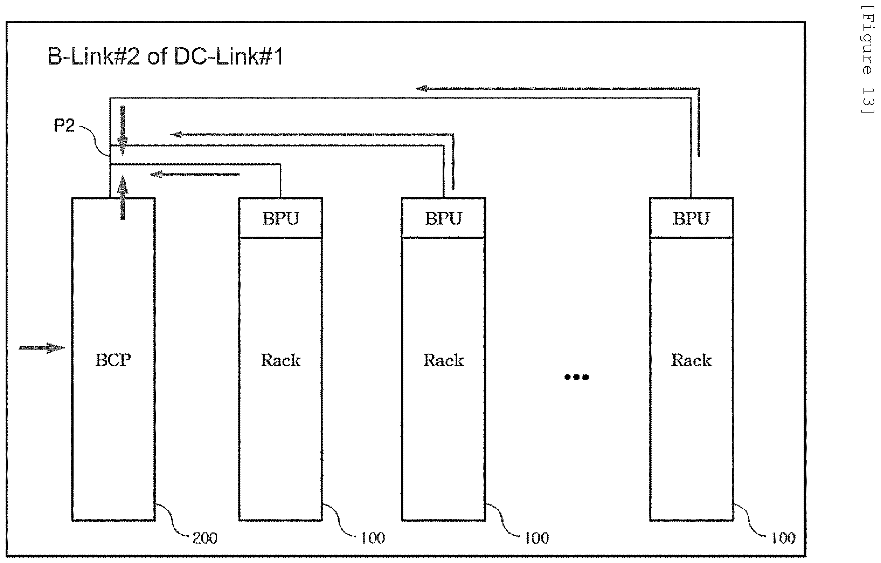

When a short circuit is generated at P2, as illustrated in FIG. 13, a high short-circuit current applied from DC-Links #2 and #3 and the battery racks 100 of B-Link#2 of DC-Link #1 flows toward the BCP of B-Link #2. At this time, it is necessary for each of the protection elements included in the battery system to be able to withstand the short-circuit current generated at each location.

The battery system management device 400 may compare the short-circuit current for each protection element calculated as a result of the simulation with the limiting current of each protection element.

When at least one protection element having a short-circuit current exceeding the limiting current is detected (N in S1060), the battery system management device 400 may determine that at least one protection element is not able to withstand the generated short-circuit current, may change the number of battery racks 100 included in the battery system (e.g., decreasing the number by 1) to redefine an equivalent model, and may perform a simulation using the redefined equivalent model.

When the short-circuit currents of all of the protection elements are identified to be equal to or lower than the limiting current (Y in S1060), at the next step, the battery system management device 400 may conduct a simulation to calculate the short-circuit current for the case where a short circuit is generated at P1 (a fourth case) (S1070).

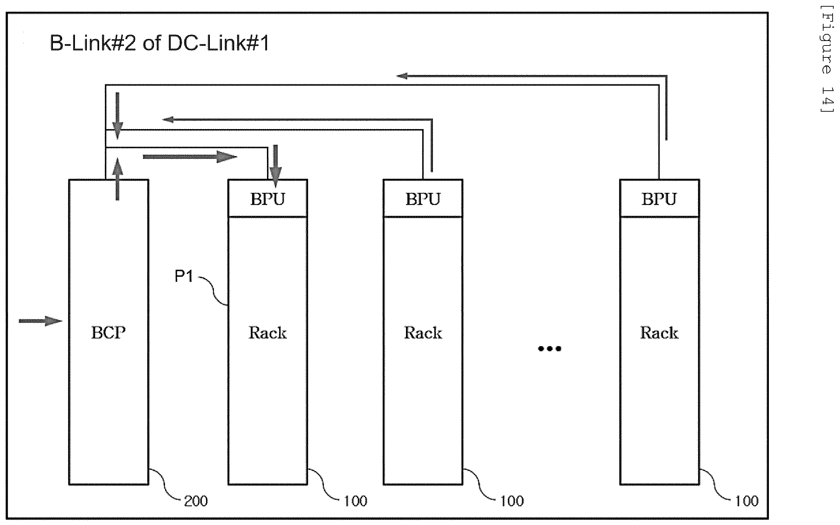

When a short circuit is generated at P1, as illustrated in FIG. 14, a high short circuit applied from DC-Links #2 and #3 and other battery racks 100 of B-Link #2 of DC-Link #1 flows toward the BPU 110 of the battery rack where the short-circuit current is generated. At this time, it is necessary for each of the protection elements included in the battery system to be able to withstand the short-circuit current generated at each location.

The battery system management device 400 may compare the short-circuit current for each protection element calculated as a result of the simulation with the limiting current of each protection element.

When at least one protection element having a short-circuit current exceeding the limiting current are detected (N in S1080), the battery system management device 400 may redefine an equivalent model by changing the number of battery racks 100 included in the battery system (e.g., decreasing the number by 1), and may conduct a simulation using the redefined equivalent model.

When the short-circuit currents of all of the protection elements are identified to be equal to or lower than the limiting current (Y in S1080), the battery system management device 400 may finally determine the number of batteries applied to the present equivalent model as the optimal number of batteries in the battery system (S1090).

Meanwhile, the battery system management device 400 may additionally conduct a simulation for a case where a short circuit is generated at a plurality of locations simultaneously or at certain time intervals, and may calculate the optimal number of batteries based on the simulation results.

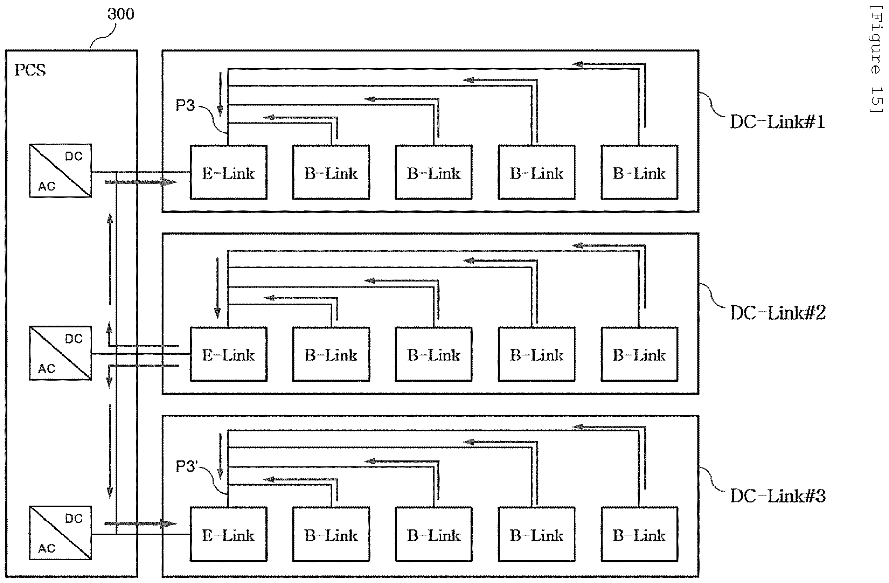

For example, as illustrated in FIG. 15, the battery system management device 400 may additionally conduct a simulation to calculate a short-circuit current for a case (e.g., a fifth case) where a short-circuit is simultaneously generated at P3 and P3'.

When a short circuit is generated simultaneously at P3 and P3', a high short-circuit current flows to the E-Link of DC-Link #1 and the E-Link of DC-Link #3. At this time, it is necessary for each of the protection elements included in the battery system to be able to withstand the short-circuit current generated at each location. The battery system management device 400 may conduct a simulation for the fifth case in a manner similar to those described above, may identify whether the short-circuit currents of all of the protection elements are equal to or lower than the limiting current, and may adjust the number of batteries.

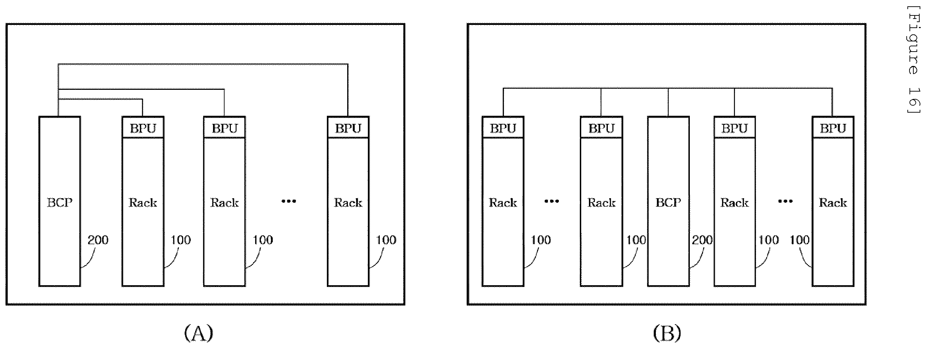

(A) and (B) of FIG.16 are block diagrams for explaining structures of battery systems derived according to the present disclosure.

(A) of FIG. 16 illustrates a battery system with an asymmetric parallel connection structure, and FIG. 16B illustrates a battery system with a symmetric parallel structure.

Regarding (A) and (B) of FIG.16, as a result of calculating the maximum numbers of battery racks 100 using the present disclosure, it was identified that the asymmetric parallel connection structure ((A) of FIG. 16) is able to include more battery racks 100 than the symmetric parallel connection structure ((B) of FIG. 16).

Due to the connection structures of the battery systems, the length of the connection elements 130, 230 includes the symmetric parallel connection structure ((A) of FIG. 16) is shorter than that in the asymmetric parallel connection structure ((A) of FIG. 16) and thus has relatively a lower inductance and resistance. Accordingly, the symmetric parallel connection structure ((A) of FIG. 16) has a relatively small time constant, thereby having a relatively high total short-circuit current. In contrast, the asymmetric parallel connection structure ((A) of FIG. 16) has a relatively lower total short-circuit current, and is able to include more battery racks 100 than the symmetric parallel connection structure ((B) of FIG. 16).

FIG. 17 is a block diagram of a battery system management device 400 according to an embodiment of the present disclosure.

The battery system management device 400 may include at least one processor 410, memory 420 that stores at least one command to be executed through the processor, and a transceiver 430 connected to a network to conduct communication. In addition, the battery system management device 400 may further include, for example, an input interface device 440, an output interface device 450, and a separate storage device 460. In addition, the individual components included in the battery system management device 400 may be connected to each other by a bus 470 and may communicate with each other.

The processor 410 may refer to a central processing unit (CPU), a graphics processing unit (GPU), or a dedicated processor on which methods according to embodiments of the present disclosure are executed. The memory (or a storage device) may include at least one of a volatile storage medium and a non-volatile storage medium. For example, the memory may include at least one of read only memory (ROM) and random access memory (RAM).

Meanwhile, at least one command executed through the processor may include: a command to define an equivalent model for a battery system having a predefined connection structure including a plurality of batteries and at least one protection element; a command to calculate a short-circuit current generated in the battery system by using the equivalent model and reflecting a time constant characteristic of the connection element according to the predefined connection structure when a short circuit is generated at a certain location in the battery system; a command to compare the calculated short-circuit current with a limiting current of the protection element; and a command to determine the number of batteries provided in the battery system based on a result of comparison.

The protection element may be placed at one or more locations among the input/output terminals of the batteries, the connection points of the batteries, and the connection points of the battery groups.

The command to define the equivalent model may include a command to define an equivalent model for the battery system based on: a first equivalent model for the batteries; a second equivalent model for the protection element; and a third equivalent model for a connection element that electrically connects the batteries to an external device. Here, the third equivalent model may be defined as an RL equivalent circuit having a resistance value and inductance corresponding to a length of the connection element.

The command to calculate the short-circuit current may include a command to calculate a short-circuit current applied to each of a plurality of protection elements by reflecting a time constant characteristic of the connection element according to the predefined connection structure when a short circuit is generated at one or more locations.

The locations where the short circuit is generated may include at least one of a first location defined as a location inside a battery, a second location defined as a location between the battery and the connection points of batteries, a third location defined as a location between the connection point of the batteries and a connection point of battery groups, and a fourth point defined as a location between the connection point of the battery groups and a power conversion system.

The command to compare the calculated short-circuit current with the limiting current of the protection element may include a command to identify whether the short-circuit current exceeds a limiting current defined based on a short-circuit capacity of each of the plurality of protection elements.

The command to determine the number of batteries may include a command to determine the maximum number of batteries that prevents a short-circuit current applied to each of plurality of protection elements from exceeding the limiting current of each of the plurality of protection elements.

The command to calculate the short-circuit current may include a command to calculate, for each of cases where a short circuit is generated at a plurality of locations, the short-circuit current applied to each of the plurality of protection elements by reflecting a time constant characteristic of the connection element according to the predetermined connection structure. Here, the command to determine the number of batteries may include a command to determine, for all of the cases, the maximum number of batteries that prevents the short-circuit current applied to each of the plurality of protection elements from exceeding the limiting current of each of the plurality of protection elements.

The command to determine the maximum number of batteries may include: a command to redefine an equivalent model by changing the number of batteries included in the battery system according to the result of comparison of the short-circuit current and the limiting current; and a command to recalculate a short-circuit current based on the redefined equivalent model.

Meanwhile, the operations of the method according to an embodiment of the present invention may be implemented as computer-readable programs or codes on computer-readable recording media. The computer-readable recoding media include all types of recording devices that store data readable by computer systems. In addition, the computer-readable recoding media may be distributed over the computer systems connected to a network such that the computer-readable programs or codes can be stored and executed in a distribution manner.

Although some aspects of the disclosure have been described in the context of a device, these aspects also represent a description of a corresponding method where a block or device corresponds to a method step or a feature of a method step. Similarly, aspects described in the context of a method also represent a description of a corresponding block or item or a feature of a corresponding device. Some or all of method steps may be execute by (or using), for example, a hardware device such as a microprocessor, a programmable computer, or an electronic circuit. In some embodiments, one or more of the most important method steps may be executed by such a device.

Although the present disclosure has been described with reference to embodiments of the present disclosure, a person ordinarily skilled in the art will understand that various modifications and changes can be made to the present disclosure without departing from the scope of the present disclosure as set forth in the claims below.

At last in is noted that the embodiments in the present disclosure are not necessarily belonging to the scope of the invention. The invention is defined by the features of the independent claims 1 and 9. Preferred embodiments are defined in the dependent claims.

## Claims

1. A battery system management device (400) comprising:
at least one processor (410) capable of communicating with a battery system (20); and
a memory (420) coupled to the processor (410) and configured to store at least one command to be executed through the at least one processor (410),
wherein the at least one command includes:
a command to define (S410) an equivalent model for the battery system (20) configured to have a predefined connection structure including a plurality of batteries and at least one protection element (110, 210, 310);
a command to calculate (S420) a short-circuit current generated in the battery system (20) by using the equivalent model while reflecting a time constant characteristic of a connection element (130, 230) according to the predefined connection structure when a short circuit is generated at a location in the battery system (20);
a command to compare (S430) the calculated short-circuit current with a limiting current of the protection element (110, 210, 310); and
a command to determine (S440) a number of batteries provided in the battery system (20) based on a result of comparison;
wherein the command to calculate (S420) the short-circuit current includes:
a command to calculate a short-circuit current applied to each of a plurality of protection elements (110, 210, 310) by reflecting a time constant characteristic of the connection element (130, 230) according to the predefined connection structure when the short circuit is generated at one or more locations;
**characterized in that** the locations where the short circuit is generated include:
a first location (P1) defined as a location inside a battery;
a second location (P2) defined as a location between a battery and a connection point of batteries;
a third location (P3) defined as a location between the connection point of the batteries and a connection point of battery groups; and
a fourth location (P4) defined as a location between the connection point of the battery groups and a power conversion system.

2. The battery system management device of claim 1, wherein the protection element (110, 210, 310) is disposed at one or more locations among an input/output terminal of a battery, a connection point of batteries, and a connection point of battery groups.

3. The battery system management device of claim 1, wherein the command to define (S410) the equivalent model includes a command to define the equivalent model for the battery system based on:
a first equivalent model for the batteries;
a second equivalent model for the protection element (110, 210, 310); and
a third equivalent model for the connection element (130, 230) that electrically connects the batteries to an external device.

4. The battery system management device of claim 3, wherein the third equivalent model is defined as an RL equivalent circuit having a resistance value and inductance corresponding to a length of the connection element (130, 230) .

5. The battery system management device of claim 1, wherein the command to compare (S430) includes:
a command to identify whether the short-circuit current exceeds a limiting current defined based on a short-circuit capacity of each of the plurality of protection elements (110, 210, 310).

6. The battery system management device of claim 1,
wherein the command to determine (S440) the number of batteries includes:
a command to determine a maximum number of batteries that prevents a short-circuit current applied to each of a plurality of protection elements (110, 210, 310) from exceeding the limiting current of each of the plurality of protection elements (110, 210, 310).

7. The battery system management device of claim 6, wherein the command to calculate (S420) the short-circuit current includes:
a command to calculate, for each of cases where a short circuit is generated at a plurality of locations, the short-circuit current applied to each of the plurality of protection elements (110, 210, 310) by reflecting the time constant characteristic of the connection element (130, 230) according to the predetermined connection structure, and
wherein the command to determine (S440) the number of batteries includes:
a command to determine, for all of the cases, the maximum number of batteries that prevents the short-circuit current applied to each of the plurality of protection elements (110, 210, 310) from exceeding the limiting current of each of the plurality of protection elements (110, 210, 310).

8. The battery system management device of claim 7, wherein the command to determine (S440) the maximum number of batteries includes:
a command to redefine (S610) an equivalent model by changing the number of batteries included in the battery system (20) according to the result of comparison of the short-circuit current and the limiting current; and
a command to recalculate (S620) a short-circuit current based on the redefined equivalent model.

9. A method of managing a battery system (20) by a battery system management device (400), the method comprising:
defining (S410) an equivalent model for a battery system (20) configured to have a predefined connection structure including a plurality of batteries and at least one protection element (110, 210, 310);
calculating (S420) a short-circuit current generated in the battery system (20) by using the equivalent model while reflecting a time constant characteristic of a connection element according to the predefined connection structure when the short circuit is generated at a certain location in the battery system (20);
comparing (S430)the calculated short-circuit current with a limiting current of the protection element (110, 210, 310); and
determining (S440) a number of batteries provided in the battery system (20) based on a result of comparison;
wherein the calculating (S420) the short-circuit current includes:
calculating a short-circuit current applied to each of a plurality of protection elements (110, 210, 310) by reflecting a time constant characteristic of the connection element (130, 230) according to the predefined connection structure when the short circuit is generated at one or more locations;
**characterized in that** the locations where the short circuit is generated include at least one of:
a first location (P1) defined as a location inside a battery;
a second location (P2) defined as a location between a battery and the connection point of batteries;
a third location (P3) defined as a location between the connection point of the batteries and a connection point of battery groups; and
a fourth location (P4) defined between the connection point of the battery groups and a power conversion system.

10. The method of claim 9, wherein the at least one protection element (110, 210, 310) is placed at one or more locations among an input/output terminal of a battery, a connection point of batteries, and a connection point of battery groups.

11. The method of claim 9, wherein the defining (S410) the equivalent model includes defining the equivalent model for the battery system based on:
a first equivalent model for the batteries;
a second equivalent model for the protection element (110, 210, 310); and
a third equivalent model for the connection element (130, 230) that electrically connects the batteries to an external device.

12. The method of claim 11, wherein the third equivalent model is defined as an RL equivalent circuit having a resistance value and inductance corresponding to a length of the connection element.

13. The method of claim 9, wherein the comparing (S430) includes:
identifying whether the short-circuit current exceeds a limiting current defined based on a short-circuit capacity of each of the plurality of protection elements (110, 210, 310).

14. The method of claim 9,
wherein the determining (S440) the number of batteries includes:
determining a maximum number of batteries that prevents a short-circuit current applied to each of a plurality of protection elements (110, 210, 310) from exceeding the limiting current of each of the plurality of protection elements (110, 210, 310).

15. The method of claim 14, wherein the calculating (S420) the short-circuit current includes:
calculating, for each of cases where a short circuit is generated at a plurality of locations, the short-circuit current applied to each of the plurality of protection elements (110, 210, 310) by reflecting the time constant characteristic of the connection element (130, 230) according to the predetermined connection structure, and
wherein the determining (S440) the number of batteries includes:
determining, for all of the cases, the maximum number of batteries that prevents the short-circuit current applied to each of the plurality of protection elements (110, 210, 310) from exceeding the limiting current of each of the plurality of protection elements (110, 210, 310).

16. The method of claim 15, wherein the determining (S440) the maximum number of batteries includes:
redefining (S610) an equivalent model by changing the number of batteries included in the battery system (20) according to the result of comparison of the short-circuit current and the limiting current; and
recalculating (s620) a short-circuit current based on the redefined equivalent model.

## Patentansprüche

1. Batteriesystemmanagementvorrichtung (400), umfassend:
mindestens einen Prozessor (410), der in der Lage ist, mit einem Batteriesystem (20) zu kommunizieren; und
einen Speicher (420), der mit dem Prozessor (410) gekoppelt und so konfiguriert ist, dass er mindestens einen Befehl speichert, der durch den mindestens einen Prozessor (410) ausgeführt werden soll,
wobei der mindestens eine Befehl enthält:
einen Befehl zum Definieren (S410) eines Ersatzmodells für das Batteriesystem (20), das so konfiguriert ist, dass es eine vordefinierte Verbindungsstruktur aufweist, die eine Vielzahl von Batterien und mindestens ein Schutzelement (110, 210, 310) enthält;
einen Befehl zum Berechnen (S420) eines Kurzschlussstroms, der im Batteriesystem (20) erzeugt wird, unter Verwendung des Ersatzmodells, während eine Zeitkonstantencharakteristik eines Verbindungselements (130, 230) gemäß der vordefinierten Verbindungsstruktur widergespiegelt wird, wenn ein Kurzschluss an einem Ort im Batteriesystem (20) erzeugt wird;
einen Befehl zum Vergleichen (S430) des berechneten Kurzschlussstroms mit einem Grenzstrom des Schutzelements (110, 210, 310); und
einen Befehl zum Bestimmen (S440) einer Anzahl von Batterien, die im Batteriesystem (20) vorgesehen sind, basierend auf einem Ergebnis des Vergleichs;
wobei der Befehl zum Berechnen (S420) des Kurzschlussstroms enthält:
einen Befehl zum Berechnen eines Kurzschlussstroms, der an jedes einer Vielzahl von Schutzelementen (110, 210, 310) angelegt wird, indem eine Zeitkonstantencharakteristik des Verbindungselements (130, 230) gemäß der vordefinierten Verbindungsstruktur widergespiegelt wird, wenn der Kurzschluss an einem oder mehreren Orten erzeugt wird;
**dadurch gekennzeichnet, dass** die Orte, an denen der Kurzschluss erzeugt wird, enthalten:
einen ersten Ort (P1), der als ein Ort innerhalb einer Batterie definiert ist;
einen zweiten Ort (P2), der als ein Ort zwischen einer Batterie und einem Verbindungspunkt von Batterien definiert ist;
einen dritten Ort (P3), der als ein Ort zwischen dem Verbindungspunkt der Batterien und einem Verbindungspunkt von Batteriegruppen definiert ist; und
einen vierten Ort (P4), der als ein Ort zwischen dem Verbindungspunkt der Batteriegruppen und einem Leistungsumwandlungssystem definiert ist.

2. Batteriesystemmanagementvorrichtung nach Anspruch 1, wobei das Schutzelement (110, 210, 310) an einem oder mehreren Orten, unter einem Eingangs-/Ausgangsanschluss einer Batterie, einem Verbindungspunkt von Batterien und einem Verbindungspunkt von Batteriegruppen, angeordnet ist.

3. Batteriesystemmanagementvorrichtung nach Anspruch 1, wobei der Befehl zum Definieren (S410) des Ersatzmodells einen Befehl zum Definieren des Ersatzmodells für das Batteriesystem basierend auf Folgendem umfasst:
einem ersten Ersatzmodell für die Batterien;
einem zweiten Ersatzmodell für das Schutzelement (110, 210, 310); und
einem dritten Ersatzmodell für das Verbindungselement (130, 230), das die Batterien elektrisch mit einem externen Gerät verbindet.

4. Batteriesystemmanagementvorrichtung nach Anspruch 3, wobei das dritte Ersatzmodell als ein RL-Ersatzschaltkreis definiert ist, der einen Widerstandswert und eine Induktivität aufweist, die einer Länge des Verbindungselements (130, 230) entsprechen.

5. Batteriesystemmanagementvorrichtung nach Anspruch 1, wobei der Befehl zum Vergleichen (S430) enthält:
einen Befehl zum Identifizieren, ob der Kurzschlussstrom einen Grenzstrom überschreitet, der basierend auf einer Kurzschlusskapazität von jedem der Vielzahl von Schutzelementen (110, 210, 310) definiert ist.

6. Batteriesystemmanagementvorrichtung nach Anspruch 1, wobei der Befehl zum Bestimmen (S440) der Anzahl von Batterien enthält:
einen Befehl zum Bestimmen einer maximalen Anzahl von Batterien, die verhindert, dass ein an jedes einer Vielzahl von Schutzelementen (110, 210, 310) angelegter Kurzschlussstrom den Grenzstrom von jedem der Vielzahl von Schutzelementen (110, 210, 310) überschreitet.

7. Batteriesystemmanagementvorrichtung nach Anspruch 6, wobei der Befehl zum Berechnen (S420) des Kurzschlussstroms enthält:
einen Befehl zum Berechnen, für jeden der Fälle, in denen ein Kurzschluss an einer Vielzahl von Orten erzeugt wird, des Kurzschlussstroms, der an jedes der Vielzahl von Schutzelementen (110, 210, 310) angelegt wird, indem die Zeitkonstantencharakteristik des Verbindungselements (130, 230) gemäß der vorbestimmten Verbindungsstruktur widergespiegelt wird, und
wobei der Befehl zum Bestimmen (S440) der Anzahl von Batterien enthält:
einen Befehl zum Bestimmen, für alle Fälle, der maximalen Anzahl von Batterien, die verhindert, dass der an jedes der Vielzahl von Schutzelementen (110, 210, 310) angelegte Kurzschlussstrom den Grenzstrom von jedem der Vielzahl von Schutzelementen (110, 210, 310) überschreitet.

8. Batteriesystemmanagementvorrichtung nach Anspruch 7, wobei der Befehl zum Bestimmen (S440) der maximalen Anzahl von Batterien enthält:
einen Befehl zum Neudefinieren (S610) eines Ersatzmodells durch Ändern der Anzahl der im Batteriesystem (20) enthaltenen Batterien gemäß dem Ergebnis des Vergleichs des Kurzschlussstroms und des Grenzstroms; und
einen Befehl zum Neuberechnen (S620) eines Kurzschlussstroms basierend auf dem neu definierten Ersatzmodell.

9. Verfahren zur Verwaltung eines Batteriesystems (20) durch eine Batteriesystemmanagementvorrichtung (400), wobei das Verfahren umfasst:
Definieren (S410) eines Ersatzmodells für ein Batteriesystem (20), das so konfiguriert ist, dass es eine vordefinierte Verbindungsstruktur aufweist, die eine Vielzahl von Batterien und mindestens ein Schutzelement (110, 210, 310) enthält;
Berechnen (S420) eines Kurzschlussstroms, der im Batteriesystem (20) erzeugt wird, unter Verwendung des Ersatzmodells, während eine Zeitkonstantencharakteristik eines Verbindungselements gemäß der vordefinierten Verbindungsstruktur widergespiegelt wird, wenn der Kurzschluss an einem bestimmten Ort im Batteriesystem (20) erzeugt wird;
Vergleichen (S430) des berechneten Kurzschlussstroms mit einem Grenzstrom des Schutzelements (110, 210, 310); und
Bestimmen (S440) einer Anzahl von Batterien, die im Batteriesystem (20) vorgesehen sind, basierend auf einem Ergebnis des Vergleichs;
wobei das Berechnen (S420) des Kurzschlussstroms enthält:
Berechnen eines Kurzschlussstroms, der an jedes einer Vielzahl von Schutzelementen (110, 210, 310) angelegt wird, indem eine Zeitkonstantencharakteristik des Verbindungselements (130, 230) gemäß der vordefinierten Verbindungsstruktur widergespiegelt wird, wenn der Kurzschluss an einem oder mehreren Orten erzeugt wird;
**dadurch gekennzeichnet, dass** die Orte, an denen der Kurzschluss erzeugt wird, mindestens einen der folgenden enthalten:
einen ersten Ort (P1), der als ein Ort innerhalb einer Batterie definiert ist;
einen zweiten Ort (P2), der als ein Ort zwischen einer Batterie und dem Verbindungspunkt von Batterien definiert ist;
einen dritten Ort (P3), der als ein Ort zwischen dem Verbindungspunkt der Batterien und einem Verbindungspunkt von Batteriegruppen definiert ist; und
einen vierten Ort (P4), der zwischen dem Verbindungspunkt der Batteriegruppen und einem Leistungsumwandlungssystem definiert ist.

10. Verfahren nach Anspruch 9, wobei das mindestens eine Schutzelement (110, 210, 310) an einem oder mehreren Orten, unter einem Eingangs-/Ausgangsanschluss einer Batterie, einem Verbindungspunkt von Batterien und einem Verbindungspunkt von Batteriegruppen, platziert ist.

11. Verfahren nach Anspruch 9, wobei das Definieren (S410) des Ersatzmodells das Definieren des Ersatzmodells für das Batteriesystem basierend auf Folgendem enthält:
einem ersten Ersatzmodell für die Batterien;
einem zweiten Ersatzmodell für das Schutzelement (110, 210, 310); und
einem dritten Ersatzmodell für das Verbindungselement (130, 230), das die Batterien elektrisch mit einem externen Gerät verbindet.

12. Verfahren nach Anspruch 11, wobei das dritte Ersatzmodell als ein RL-Ersatzschaltkreis definiert ist, der einen Widerstandswert und eine Induktivität aufweist, die einer Länge des Verbindungselements entsprechen.

13. Verfahren nach Anspruch 9, wobei das Vergleichen (S430) enthält:
Identifizieren, ob der Kurzschlussstrom einen Grenzstrom überschreitet, der basierend auf einer Kurzschlusskapazität von jedem der Vielzahl von Schutzelementen (110, 210, 310) definiert ist.

14. Verfahren nach Anspruch 9,
wobei das Bestimmen (S440) der Anzahl von Batterien enthält:
Bestimmen einer maximalen Anzahl von Batterien, die verhindert, dass ein an jedes einer Vielzahl von Schutzelementen (110, 210, 310) angelegter Kurzschlussstrom den Grenzstrom von jedem der Vielzahl von Schutzelementen (110, 210, 310) überschreitet.

15. Verfahren nach Anspruch 14, wobei das Berechnen (S420) des Kurzschlussstroms enthält:
Berechnen, für jeden der Fälle, in denen ein Kurzschluss an einer Vielzahl von Orten erzeugt wird, des Kurzschlussstroms, der an jedes der Vielzahl von Schutzelementen (110, 210, 310) angelegt wird, indem die Zeitkonstantencharakteristik des Verbindungselements (130, 230) gemäß der vorbestimmten Verbindungsstruktur widergespiegelt wird, und
wobei das Bestimmen (S440) der Anzahl von Batterien enthält:
Bestimmen, für alle Fälle, der maximalen Anzahl von Batterien, die verhindert, dass der an jedes der Vielzahl von Schutzelementen (110, 210, 310) angelegte Kurzschlussstrom den Grenzstrom von jedem der Vielzahl von Schutzelementen (110, 210, 310) überschreitet.

16. Verfahren nach Anspruch 15, wobei das Bestimmen (S440) der maximalen Anzahl von Batterien enthält:
Neudefinieren (S610) eines Ersatzmodells durch Ändern der Anzahl der im Batteriesystem (20) enthaltenen Batterien gemäß dem Ergebnis des Vergleichs des Kurzschlussstroms und des Grenzstroms; und
Neuberechnen (s620) eines Kurzschlussstroms basierend auf dem neu definierten Ersatzmodell.

## Revendications

1. Un dispositif de gestion de système de batterie (400) comprenant :
au moins un processeur (410) capable de communiquer avec un système de batterie (20) ; et
une mémoire (420) couplée au processeur (410) et configurée pour stocker au moins une commande à exécuter par l'intermédiaire de l'au moins un processeur (410),
dans lequel l'au moins une commande inclut :
une commande pour définir (S410) un modèle équivalent pour le système de batterie (20) configuré pour avoir une structure de connexion prédéfinie incluant une pluralité de batteries et au moins un élément de protection (110, 210, 310) ;
une commande pour calculer (S420) un courant de court-circuit généré dans le système de batterie (20) en utilisant le modèle équivalent tout en reflétant une caractéristique de constante de temps d'un élément de connexion (130, 230) selon la structure de connexion prédéfinie lorsqu'un court-circuit est généré à un emplacement dans le système de batterie (20) ;
une commande pour comparer (S430) le courant de court-circuit calculé avec un courant de limitation de l'élément de protection (110, 210, 310) ; et
une commande pour déterminer (S440) un nombre de batteries présentes dans le système de batterie (20) sur la base d'un résultat de comparaison ;
dans lequel la commande pour calculer (S420) le courant de court-circuit inclut :
une commande pour calculer un courant de court-circuit appliqué à chacun d'une pluralité d'éléments de protection (110, 210, 310) en reflétant une caractéristique de constante de temps de l'élément de connexion (130, 230) selon la structure de connexion prédéfinie lorsque le court-circuit est généré à un ou plusieurs emplacements ;
**caractérisé en ce que** les emplacements où le court-circuit est généré incluent :
un premier emplacement (P1) défini comme un emplacement à l'intérieur d'une batterie ;
un deuxième emplacement (P2) défini comme un emplacement entre une batterie et un point de connexion de batteries ;
un troisième emplacement (P3) défini comme un emplacement entre le point de connexion des batteries et un point de connexion de groupes de batteries ; et
un quatrième emplacement (P4) défini comme un emplacement entre le point de connexion des groupes de batteries et un système de conversion de puissance.

2. Le dispositif de gestion de système de batterie selon la revendication 1, dans lequel l'élément de protection (110, 210, 310) est disposé à un ou plusieurs emplacements parmi une borne d'entrée/sortie d'une batterie, un point de connexion de batteries, et un point de connexion de groupes de batteries.

3. Le dispositif de gestion de système de batterie selon la revendication 1, dans lequel la commande pour définir (S410) le modèle équivalent inclut une commande pour définir le modèle équivalent pour le système de batterie sur la base de :
un premier modèle équivalent pour les batteries ;
un deuxième modèle équivalent pour l'élément de protection (110, 210, 310) ; et
un troisième modèle équivalent pour l'élément de connexion (130, 230) qui connecte électriquement les batteries à un dispositif externe.

4. Le dispositif de gestion de système de batterie selon la revendication 3, dans lequel le troisième modèle équivalent est défini comme un circuit équivalent RL ayant une valeur de résistance et une inductance correspondant à une longueur de l'élément de connexion (130, 230).

5. Le dispositif de gestion de système de batterie selon la revendication 1, dans lequel la commande pour comparer (S430) inclut :
une commande pour identifier si le courant de court-circuit dépasse un courant de limitation défini sur la base d'une capacité de court-circuit de chacun de la pluralité d'éléments de protection (110, 210, 310).

6. Le dispositif de gestion de système de batterie selon la revendication 1, dans lequel la commande pour déterminer (S440) le nombre de batteries inclut :
une commande pour déterminer un nombre maximum de batteries qui empêche un courant de court-circuit appliqué à chacun d'une pluralité d'éléments de protection (110, 210, 310) de dépasser le courant de limitation de chacun de la pluralité d'éléments de protection (110, 210, 310).

7. Le dispositif de gestion de système de batterie selon la revendication 6, dans lequel la commande pour calculer (S420) le courant de court-circuit inclut :
une commande pour calculer, pour chacun des cas où un court-circuit est généré à une pluralité d'emplacements, le courant de court-circuit appliqué à chacun de la pluralité d'éléments de protection (110, 210, 310) en reflétant la caractéristique de constante de temps de l'élément de connexion (130, 230) selon la structure de connexion prédéterminée, et
dans lequel la commande pour déterminer (S440) le nombre de batteries inclut :
une commande pour déterminer, pour tous les cas, le nombre maximum de batteries qui empêche le courant de court-circuit appliqué à chacun de la pluralité d'éléments de protection (110, 210, 310) de dépasser le courant de limitation de chacun de la pluralité d'éléments de protection (110, 210, 310).

8. Le dispositif de gestion de système de batterie selon la revendication 7, dans lequel la commande pour déterminer (S440) le nombre maximum de batteries inclut :
une commande pour redéfinir (S610) un modèle équivalent en changeant le nombre de batteries incluses dans le système de batterie (20) selon le résultat de la comparaison du courant de court-circuit et du courant de limitation ; et
une commande pour recalculer (S620) un courant de court-circuit sur la base du modèle équivalent redéfini.

9. Un procédé de gestion d'un système de batterie (20) par un dispositif de gestion de système de batterie (400), le procédé comprenant :
définir (S410) un modèle équivalent pour un système de batterie (20) configuré pour avoir une structure de connexion prédéfinie incluant une pluralité de batteries et au moins un élément de protection (110, 210, 310) ;
calculer (S420) un courant de court-circuit généré dans le système de batterie (20) en utilisant le modèle équivalent tout en reflétant une caractéristique de constante de temps d'un élément de connexion selon la structure de connexion prédéfinie lorsque le court-circuit est généré à un certain emplacement dans le système de batterie (20) ;
comparer (S430) le courant de court-circuit calculé avec un courant de limitation de l'élément de protection (110, 210, 310) ; et
déterminer (S440) un nombre de batteries présentes dans le système de batterie (20) sur la base d'un résultat de comparaison ;
dans lequel le calcul (S420) du courant de court-circuit inclut :
calculer un courant de court-circuit appliqué à chacun d'une pluralité d'éléments de protection (110, 210, 310) en reflétant une caractéristique de constante de temps de l'élément de connexion (130, 230) selon la structure de connexion prédéfinie lorsque le court-circuit est généré à un ou plusieurs emplacements ;
**caractérisé en ce que** les emplacements où le court-circuit est généré incluent au moins l'un parmi :
un premier emplacement (P1) défini comme un emplacement à l'intérieur d'une batterie ;
un deuxième emplacement (P2) défini comme un emplacement entre une batterie et le point de connexion de batteries ;
un troisième emplacement (P3) défini comme un emplacement entre le point de connexion des batteries et un point de connexion de groupes de batteries ; et
un quatrième emplacement (P4) défini entre le point de connexion des groupes de batteries et un système de conversion de puissance.

10. Le procédé selon la revendication 9, dans lequel l'au moins un élément de protection (110, 210, 310) est placé à un ou plusieurs emplacements parmi une borne d'entrée/sortie d'une batterie, un point de connexion de batteries, et un point de connexion de groupes de batteries.

11. Le procédé selon la revendication 9, dans lequel la définition (S410) du modèle équivalent inclut la définition du modèle équivalent pour le système de batterie sur la base de :
un premier modèle équivalent pour les batteries ;
un deuxième modèle équivalent pour l'élément de protection
(110, 210, 310) ; et
un troisième modèle équivalent pour l'élément de connexion (130, 230) qui connecte électriquement les batteries à un dispositif externe.

12. Le procédé selon la revendication 11, dans lequel le troisième modèle équivalent est défini comme un circuit équivalent RL ayant une valeur de résistance et une inductance correspondant à une longueur de l'élément de connexion.

13. Le procédé selon la revendication 9, dans lequel la comparaison (S430) inclut :
identifier si le courant de court-circuit dépasse un courant de limitation défini sur la base d'une capacité de court-circuit de chacun de la pluralité d'éléments de protection (110, 210, 310).

14. Le procédé selon la revendication 9,
dans lequel la détermination (S440) du nombre de batteries inclut :
déterminer un nombre maximum de batteries qui empêche un courant de court-circuit appliqué à chacun d'une pluralité d'éléments de protection (110, 210, 310) de dépasser le courant de limitation de chacun de la pluralité d'éléments de protection (110, 210, 310).

15. Le procédé selon la revendication 14, dans lequel le calcul (S420) du courant de court-circuit inclut :
calculer, pour chacun des cas où un court-circuit est généré à une pluralité d'emplacements, le courant de court-circuit appliqué à chacun de la pluralité d'éléments de protection (110, 210, 310) en reflétant la caractéristique de constante de temps de l'élément de connexion (130, 230) selon la structure de connexion prédéterminée, et
dans lequel la détermination (S440) du nombre de batteries inclut :
déterminer, pour tous les cas, le nombre maximum de batteries qui empêche le courant de court-circuit appliqué à chacun de la pluralité d'éléments de protection (110, 210, 310) de dépasser le courant de limitation de chacun de la pluralité d'éléments de protection (110, 210, 310).

16. Le procédé selon la revendication 15, dans lequel la détermination (S440) du nombre maximum de batteries inclut :
redéfinir (S610) un modèle équivalent en changeant le nombre de batteries incluses dans le système de batterie (20) selon le résultat de la comparaison du courant de court-circuit et du courant de limitation ; et
recalculer (s620) un courant de court-circuit sur la base du modèle équivalent redéfini.
